# EUROPEAN PATENT APPLICATION

(11) **EP 3 492 332 A1**
(43) Date of publication of application: **05.06.2019**
(21) Application number: 16910515.2
(22) Date of filing: 27.07.2016
(51) Int. Cl.: B61D 17/00

(54) **WATER DRAIN STRUCTURE FOR RAILWAY VEHICLES**

(71) Applicant: Japan Transport Engineering Company, Kanagawa 236-0043 (JP)
(72) Inventor: ASO, Kazuo, Yokohama-shi Kanagawa 236-0043 (JP)
(74) Representative: SSM Sandmair
(86) International application number: PCT/JP2016/072034
(87) International publication number: WO 2018/020612

(57) **Abstract**

With a water drain structure for railway vehicles, fire and smoke in occurrence of a fire is prevented from flowing into the vehicle, thereby further strengthening fire-and-smoke prevention measures.

At a normal state, a water drain pipe 12 is capable of outwardly discharging water accumulated in the vehicle. A lower end 12b of the water drain pipe 12 is provided with a closure 14 receiving heat from the outside so as to close an opening of the lower end 12b of the water drain pipe 12. The closure 14 is a box body 15 including a sidewall 163 at which an opening 16a is formed, and the box body 15 covering at least the lower end 12b of the water drain pipe 12. When the box body 15 receives heat above a predetermined temperature, a shutter 18 operates under its own weight so as to close the opening 16a of the box body 15. In the event of a fire, the closure 14 receives the heat to close the opening of the lower end 12b of the water drain pipe 12, so that it can more reliably prevent intrusion of smoke and flame from the outside into the vehicle via the water drain pipe 12.

## Description

### [TECHNICAL FIELD]

The present invention relates to a water drain structure for railway vehicles, and it particularly relates to a water drain structure for outwardly discharging water accumulated in a vehicle.

### [BACKGROUND ART]

In the passenger compartment of a railway vehicle, water may stay on the floor or the like of the vehicle due to the accumulation of rainwater left because of umbrellas carried in by passengers in rainy weather or the like. Thus, it will be necessary to outwardly discharge the water that has been accumulated on the floor face or the like of the vehicle. For this reason, a water drain structure has been provided for discharging water in vehicles at their door sills or the like of side doors (e.g., see Patent Literature 1 and 2).

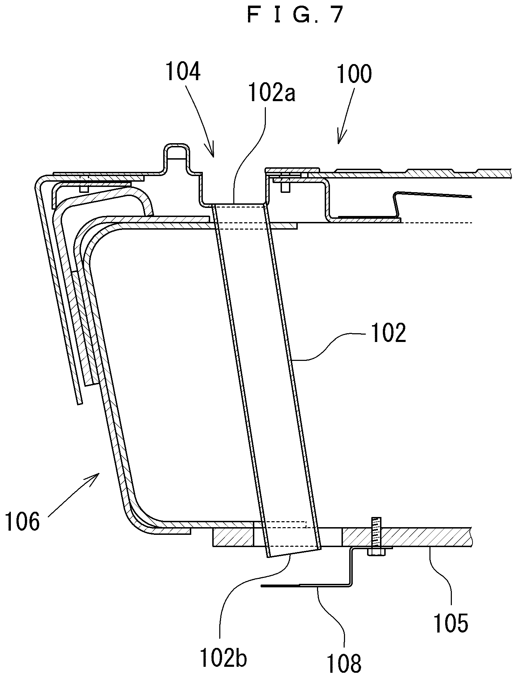

Fig. 7 illustrates a conventional railway vehicle water drain structure 100. The water drain structure 100 illustrated in Fig. 7 includes a water drain pipe 102. The water drain pipe 102 is provided passing through a floor panel 104 and an underframe 106 such that an upper end 102a has an opening at the door sill of the side door in the vehicle, and a lower end 102b has an opening below the underframe 106. A cover plate 108 covering the lower end 102b is secured to an underframe bottom plate 105. The cover plate 108 keeps a slight clearance to the lower end 102b of the water drain pipe 102 and prevents intrusion of foreign matter or unnecessary flow of air from the outside to the inside of the vehicle via the water drain pipe 102, without hindering the drain function of the water drain pipe 102. In addition, a similar water drain structure is also provided in a place where water may be accumulated, such as a door pocket of a side sliding door, a window, a toilet, a powder room, and the like of railway vehicles.

### [PRIOR ART DOCUMENT]

### Patent Literature

Patent Literature 1: JP 2000-025608 A
Patent Literature 2: JP 2000-203422 A

### [SUMMARY OF INVENTION]

### Problems to be solved by Invention

With a water drain structure for railway vehicles, the present invention prevents smoke and flame from flowing into the vehicle in occurrence of a fire, thereby further strengthening fire-and-smoke prevention measures.

### [MEANS TO SOLVE THE ABOVE PROBLEMS]

### (Aspects of the Present Invention)

Each following aspect of the invention exemplify the configuration of the present invention and is explained each separately in the aspect in order to facilitate understanding of various configurations of the present invention. Each aspect does not limit the technical scope of the present invention, and with reference to the best mode for carrying out the invention, those replaced with or omitted from a part of the constituent elements in the aspect or further added to another constituent element thereto may also be included in the technical scope of the present application.

(1) A water drain structure for railway vehicles including a water drain pipe passing through a floor panel, the water drain pipe having an upper end with an opening inside the vehicle and a lower end with an opening inside an underframe or below the underframe, the water drain structure for railway vehicles including: a closure configured to receive heat from an outside so as to close the opening of the lower end of the water drain pipe (Claim 1).

The water drain structure for railway vehicles according to this aspect, at a normal state, outwardly discharges water accumulated in the vehicle via the water drain pipe passing through the floor panel, the water drain pipe including the upper end having the opening inside the vehicle and the lower end having the opening inside the underframe or below the underframe. In addition, the lower end of the water drain pipe is provided with the closure, the closure receiving heat from the outside so as to close the opening of the lower end of the water drain pipe. Therefore, in the event of a fire, the closure receives heat and closes the opening of the lower end of the water drain pipe, thereby preventing smoke and flame from intruding into the vehicle from the outside.

(2) According to aspect (1) described above, in which the closure is a box body covering at least the lower end of the water drain pipe, the box body has an opening at a sidewall of the box body, and the closure includes a shutter configured to operate under own weight to close the opening when the box body is heated above a predetermined temperature. (Claim 2).

The water drain structure for railway vehicles according to this aspect is configured in that the closure in aspect (1) described above includes the box body covering at least the lower end of the water drain pipe, the box body having the opening at the sidewall of the box body. In addition, when the box body is heated above the predetermined temperature, the shutter operates under its own weight by closing the opening of the box body. This will eventually prevent intrusion of smoke and flame from the outside into the vehicle via the water drain pipe. Note that "predetermined temperature" is temperature higher than a normal temperature, and it exceeds temperature increase that normally occurs such as temperature increase during summer time, or temperature increase due to heat generated from equipment mounted on the railway vehicles. That is, the "predetermined temperature" means a temperature that possibly increases due to heat when unusual incidents such as a fire occur. The "predetermined temperature" will be determined as the proper temperature through experiments and the like.

(3) The water drain structure for railway vehicles according to aspect (1) or (2) described above, in which the closure is a box body having a double box structure covering at least the lower end of the water drain pipe, the box body including an outer box and an inner box, the outer box includes: a top plate; a bottom plate; and a sidewall, the water drain pipe being secured to the top plate in a condition that the water drain pipe passes through the top plate, and the sidewall having an opening in a predetermined range upward from an lower end of the sidewall, the inner box includes at least a bottom plate and a sidewall, the bottom plate having an opening through which the water drain pipe is inserted, and the inner box being slidable inside the outer box in an insertion direction of the water drain pipe, at a lowermost position in a sliding range of the inner box relative to the outer box, the opening formed at the sidewall of the outer box is closed by the sidewall of the inner box, and the closure includes a retainer retaining the inner box above the lowermost position, the retainer being configured to cause the inner box to fall to the lowermost position when the retainer is heated above a predetermined temperature (Claim 3).

The water drain structure for railway vehicles according to this aspect includes the closure in aspect (1) or (2) described above, the closure being configured with the box body having the double box structure with the outer box and the inner box, the box body covering a predetermined range of the water drain pipe from the lower end thereof. The outer box includes the top plate, the bottom plate, and the sidewall, the water drain pipe being secured to the top plate in a condition that the water drain pipe passes through the top plate. Therefore, the water drain pipe extends the inside of the outer box from above to below, and the lower end thereof is positioned above the bottom plate. In addition, the inner box includes at least the bottom plate and the sidewall, and the water drain pipe is inserted into the opening formed at the bottom plate. The inner box is movable vertically inside the outer box by sliding in the insertion direction of the water drain pipe, and at the lowermost position in the sliding range of the inner box relative to the outer box, the opening at the sidewall of the outer box is closed by the sidewall of the inner box. In this condition, the lower end of the water drain pipe is covered with the outer box and the inner box, thereby preventing intrusion of smoke and flame from the outside into the vehicle via the water drain pipe.

In addition, the closure includes the retainer that retains the inner box above the lowermost position, the retainer causing the inner box to fall to the lowermost position when the retainer is heated above the predetermined temperature. Thus, at a normal state, the lower end of the water drain pipe is in fluid communication with the outside of the outer box via the opening formed at the sidewall of the outer box, whereby the water drain structure for railway vehicles outwardly discharges water that has been accumulated in the vehicle via the water drain pipe. On the other hand, in the event of a fire, the retainer causes the inner box to fall to the lowermost position, when the retainer is heated above the predetermined temperature. Therefore, as described above, the lower end of the water drain pipe is covered with the outer box and the inner box, thereby preventing intrusion of smoke and flame from the outside into the vehicle via the water drain pipe.

(4) The water drain structure for railway vehicles according to aspect (3) described above, in which the retainer is a joint including a pair of members secured via a thermo fusible material, one member of the pair of members being secured to the outer box, and another member of the pair of members being secured to the inner box (Claim 4).

The water drain structure for railway vehicles according to this aspect includes the retainer in aspect (3) described above. The retainer is the joint where the pair of members thereof are secured via the thermofusible material. The one member of the pair of members is secured to the outer box while the other member thereof is secured to the inner box, respectively. Thus, at a normal state, the outer box and the inner box are retained via the joint such that the outer box and the inner box are positioned above the lowermost position in the sliding range of the inner box relative to the outer box. On the other hand, in the event of a fire, the joint is heated above the predetermined temperature, so that the thermofusible material will be dissolved to make the pair of members separated from each other. This will cause the inner box to fall to the lowermost position.

(5) The water drain structure for railway vehicles according to aspect (3) described above, in which the retainer is a screw made of a thermofusible material, the screw jointly tightening the outer box and the inner box.

The water drain structure for railway vehicles according to this aspect includes the retainer in aspect (3) described above. The retainer is the screw made of the thermofusible material, the screw jointly fastening the outer box and the inner box. At a normal state, the retainer retains the outer box and the inner box such that the outer box and the inner box are positioned above the lowermost position in the sliding range of the inner box relative to the outer box. On the other hand, in the event of a fire, the screw is heated above the predetermined temperature and is dissolved, thereby causing the inner box to fall to the lowermost position.

(6) The water drain structure for railway vehicles according to aspects (3) to (5) described above, in which a thermally expandable filler is disposed inside the inner box, the thermally expandable filler having a through-hole for the water drain pipe. (Claim 5).

In the water drain structure for railway vehicles according to this aspect, a through-hole for the water drain pipe is formed in the thermally expandable filler arranged in the interior of the inner box. Thus, the water drain pipe extending inside the outer box from above to below is positioned in the through-hole of the thermally expandable filler. In addition, in the event of a fire, when the retainer is heated above the predetermined temperature, the falling of the inner box to the lowermost position in the sliding range will not be hindered because of the through-hole formed through the thermally expandable filler. The inner box falls to the lowermost position, the lower end of the water drain pipe is covered with the outer box and the inner box, and the thermally expandable filler also receives heat to expand. As a result, the inner space of the inner box and the outer box will close. Further, in a condition that the inner box has fallen to the lowermost position, the through-hole for the water drain pipe of the thermally expandable filler would also close due to its own expansion. As a result, the opening at the lower end of the water drain pipe will close because of the expanded thermally expandable filler, thereby preventing intrusion of smoke and flame from the outside into the vehicle via the water drain pipe.

(7) The water drain structure for railway vehicles according to aspects (3) to (6) described above, in which the sidewall of the outer box has a hat shape in cross section in a direction intersecting the insertion direction of the water drain pipe, and a flange forming the hat shape serves as a joining portion to a constituent member of the underframe (Claim 6).

The water drain structure for railway vehicles according to this aspect includes the outer box with the sidewall. The sidewall of the outer box has the hat shape in cross section in the direction intersecting the insertion direction of the water drain pipe. The flange forming the hat shape serves as the joining portion to the constituent member of the underframe. Thus, the outer box is secured to the underframe via the flange. In this case, a wall face of the underframe constituent member is also used as an element that forms space in which to slidably house the inner box in the outer box.

(8) The water drain structure for railway vehicles according to aspect (7) described above, in which the sidewall of the inner box has a channel shape in cross section in the direction intersecting the insertion direction of the water drain pipe, and a bottom forming the channel shape faces the opening formed at the outer box (Claim 7).

The water drain structure for railway vehicles according to this aspect includes the inner box with the sidewall. The sidewall of the inner box has the channel shape in cross section in the direction intersecting the insertion direction of the water drain pipe. The bottom forming the channel shape faces the opening formed at the outer box. Thus, the sidewall of the inner box is positioned in and slidably guided by the sidewall of the outer box having the hat shape in cross section in the direction intersecting the insertion direction of the water drain pipe in aspect (7) described above. In the event of a fire, when the retainer is heated above the predetermined temperature, the inner box falls to the lowermost position in the sliding range, so that the bottom forming the channel shape of the inner box closes the opening formed at the outer box.

### [EFFECT OF INVENTION]

The present invention has been made as described above, so that intrusion of smoke and fire into the vehicle when a fire occurs can be prevented by means of the water drain structure for railway vehicles. This enables to further strengthen fire-and-smoke prevention measures.

### [BRIEF EXPLANATION OF DRAWING]

Fig. 1 schematically illustrates a water drain structure for railway vehicles according to an embodiment of the present invention: Fig. 1(a) is a cross-sectional view taken along lines A-A in Fig. 1(b); Fig. 1(b) is a side view; and Fig. 1(c) is a front view.
Fig. 2 illustrates an outer box comprising the water drain structure for railway vehicles illustrated in Fig. 1: Fig. 2(a) is a plan view; Fig. 2(b) is a side view; and Fig 2(c) is a front view.
Fig. 3 illustrates an inner box comprising the water drain structure for railway vehicles illustrated in Fig. 1: Fig. 3(a) is a plan view; Fig. 3(b) is a side view; and Fig. 3(c) is a front view.
Fig. 4 illustrates a water drain pipe comprising the water drain structure for railway vehicles illustrated in Fig. 1: Fig. 4(a) is a plan view; Fig. 4(b) is a side view; and Fig. 4(c) is a front view.
Fig. 5 illustrates a thermally expandable filler comprising the water drain structure for railway vehicles illustrated in Fig. 1: Fig. 5(a) is a plan view; Fig. 5(b) is a side view; and Fig. 5(c) is a front view.
Fig. 6 is a cross-sectional view schematically illustrating the water drain structure for railway vehicles illustrated in Fig. 1: Fig. 6(a) shows a normal state; and Fig. 6(b) shows a state when a fire occurs.
Fig. 7 is a cross-sectional view illustrating a conventional water drain structure for railway vehicles.

### [EMBODIMENTS CARRYING OUT THE PRESENT INVENTION]

Hereinafter, the best mode of the present invention will be described below with reference to the accompanying drawings. Here, parts that are the same as or equivalent to those of the conventional technique are denoted by the same reference numerals, and a detailed description thereof will be omitted.

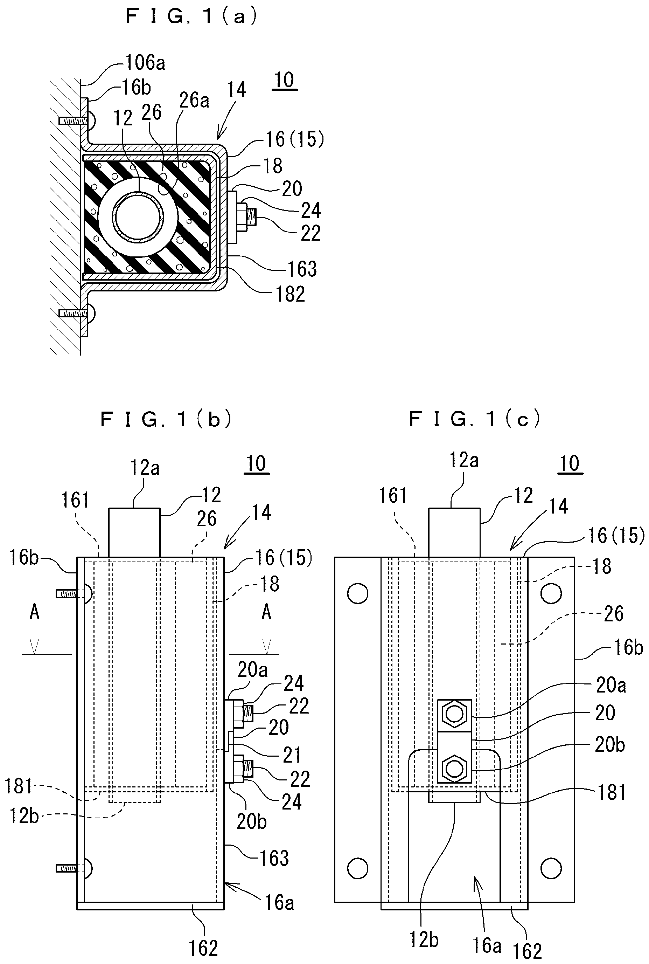

Fig. 1 schematically illustrates a water drain structure for railway vehicles 10 according to an embodiment of the present invention. The water drain structure 10 includes a water drain pipe 12 passing through a floor panel (see numerical reference 104 in Fig. 7), the water drain pipe 12 including an upper end 12a and a lower end 12b. The upper end 12a has an opening inside the vehicle, and the lower end 12b has an opening inside an underframe (see numerical reference 106 in Fig. 7) or below the underframe. Furthermore, the water drain structure 10 includes a closure 14 receiving heat from the outside so as to close the opening of the lower end of the water drain pipe 12. The water drain structure 10 is to be used in an embodiment that replaces a conventional water drain structure for railway vehicles 100 illustrated in Fig. 7. That is, the water drain pipe 12 according to the present embodiment may be disposed at a position where a conventional water drain pipe 102 is placed.

The closure 14 includes a box body 15 and a shutter 18. The box body 15 covers at least the lower end of the water drain pipe 12, a sidewall of the box body 15 being formed with an opening 16a. When the box body 15 is heated above a predetermined temperature, the shutter 18 operates under its own weight to close the opening 16a.

In addition, in the present embodiment, the closure 14 is a box body with a double box structure comprising an outer box 16 covering at least the lower end 12b of the water drain pipe 12 and an inner box 18 serving as the shutter. Note that the closure 14 further includes a retainer 20 to be described later. In the illustrated example, the closure 14 is arranged in such manner as to cover the range of about 100 mm to 150 mm from the lower end 12b of the water drain pipe 12.

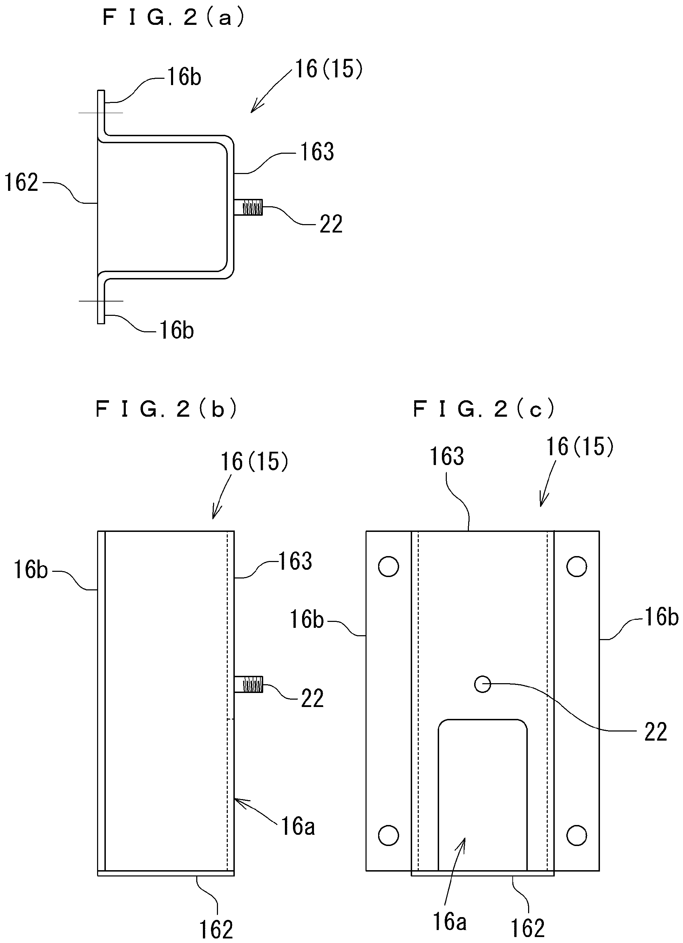

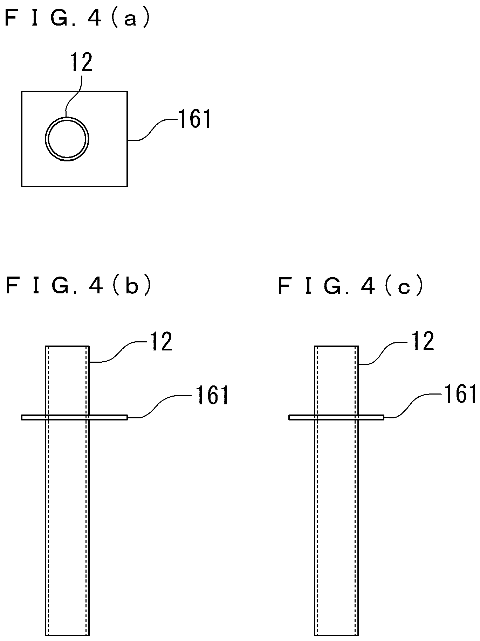

The outer box 16 includes a top plate 161, a bottom plate 162, and a sidewall 163. The water drain pipe 12 is secured to the top plate 161 in a condition that the water drain pipe 12 passes through the top plate 161. In addition, the opening 16a is formed in a predetermined range upward from the lower end of the sidewall 163 (in the illustrated example, approximately 50 mm from the lower end of the sidewall 163). In the present embodiment, as also illustrated in Fig. 2, the sidewall of the outer box 16 is substantially rectangular in plan view and has a hat shape (see Fig. 2(a)) in cross section in a direction (horizontal direction) intersecting the insertion direction (vertical direction) of the water drain pipe 12, three faces of the sidewall of the outer box 16 including the sidewall 163, and one face of the sidewall of the outer box 16 being open. A flange 16b forming the hat shape serves as a joining portion to a constituent member 106a of the underframe 106 (see Fig. 7). As a technique of securing the flange 16b to a wall face of the underframe constituent member 106a, the flange 16b may be screwed as illustrated in Fig. 1(a), or may be secured by welding or adhesion as appropriate. Note that, in the present embodiment, the top plate 161 is formed separately from the outer box 16 and integrally formed with the water drain pipe 12 as illustrated in Fig. 4. The top plate 161 is secured to the sidewall 163 of the outer box 16 by an appropriate technique such as screwing to configure the outer box 16.

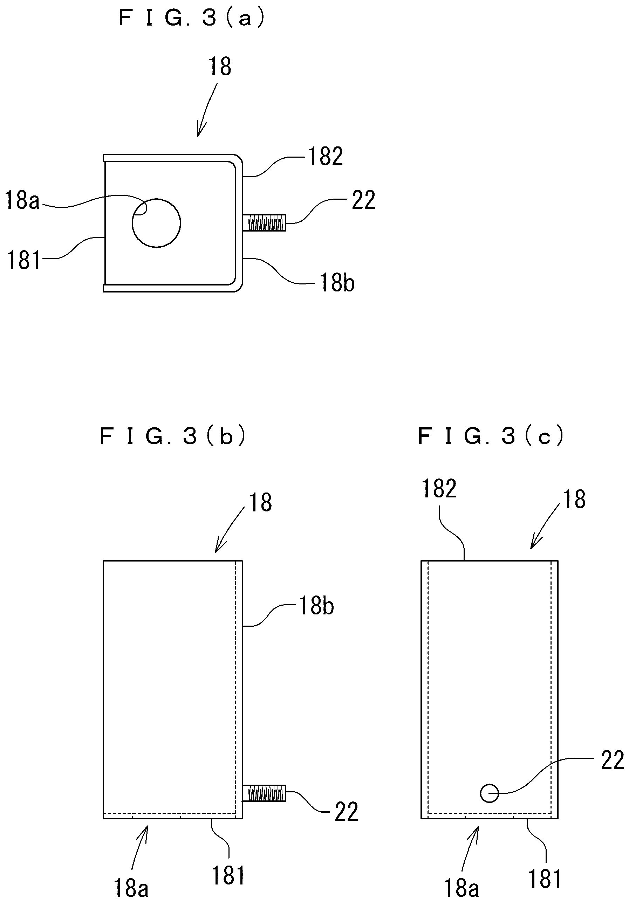

As also illustrated in Fig. 3, the inner box 18 includes at least a bottom plate 181 and a sidewall 182. An opening 18a through which the water drain pipe 12 is inserted is formed at the bottom plate 181. The diameter of the opening 18a has a sufficient clearance so as not to contact the outer wall of the water drain pipe 12. The inner box 18 is slidable inside the outer box 16 in the insertion direction of the water drain pipe 12.

Note that, in the present embodiment, as also illustrated in Fig. 3, the inner box 18 is substantially rectangular in plan view, and the sidewall 182 of the inner box 18 has a channel shape (Fig. 3(a)) in a cross section in the direction intersecting the insertion direction of the water drain pipe, three faces of the inner box 18 including the sidewall 182, and one face of the inner box 18 being open. In addition, in plan view, the inner box 18 has a shape similar to a portion surrounded by the sidewall 163 of the outer box 16. The inner box 18 is not provided with a top plate. A bottom 18b forming the channel shape is disposed facing the opening 16a formed at the outer box 16.

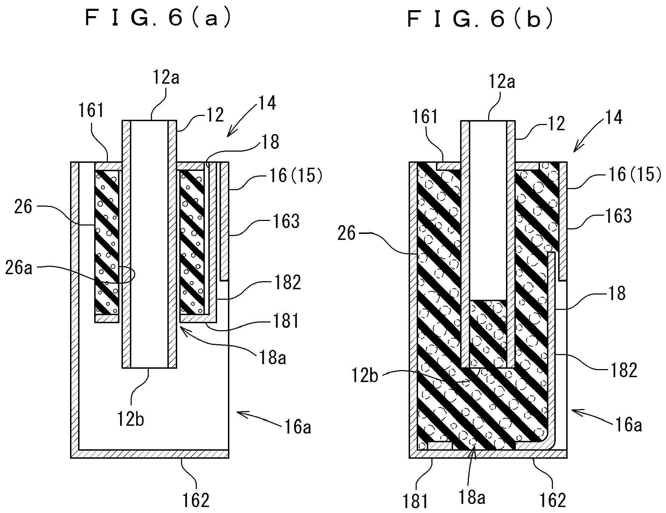

At the lowermost position (see Fig. 6(b)) in a sliding range of the inner box 18 relative to the outer box 16, the lower face of the bottom plate 181 of the inner box 18 abuts the upper face of the bottom plate 162 of the outer box 16, whereby the opening 16a formed at the sidewall 163 of the outer box 16 is closed by the sidewall 182 of the inner box 18. At this time, the opening 18a at the bottom plate 181 of the inner box 18 is also closed by the bottom plate 162 of the outer box 16.

In addition, the closure 14 includes the retainer 20 retaining the inner box 18 above the lowermost position in the sliding range of the inner box 18 relative to the outer box 16 (see Fig. 6(a)). When heated to the temperature above the predetermined temperature, the retainer 20 causes the inner box 18 to fall to the lowermost position.

The retainer 20 is a joint including a pair of members secured with a thermofusible material. As a specific example, a pair of members 20a and 20b each made of a rectangular metal plate is secured with solder 21 (reference numeral only indicated in Fig. 1(b)) as a thermofusible material. In the illustrated example, the one member 20a is secured to the outer box 16, and the other member 20b is secured to the inner box 18. In addition, a screw 22 is provided on both of the sidewall 163 of the outer box 16 and the sidewall 182 of the inner box 18, the screw 22 and a nut 24 securing the retainer 20. In occurrence of a fire, the retainer 20 is exposed to heat due to the fire, so that the solder 21 securing the pair of members 20a and 20b is heated up to a dissolved temperature or more. The solder 21 is then dissolved so as to make the pair of rectangular metal plates 20a and 20b separated from each other. As a result, the inner box 18 falls within the outer box 16 with its own weight. The shape of the pair of members 20a and 20b is a merely example, and a different shape may be used. In addition, the technique of securing the pair of members 20a and 20b to the outer box 16 and the inner box 18 and the securing position are modifiable to an appropriate one.

Moreover, as another example of the retainer 20, although not illustrated, a screw made of a fusible material may be used to jointly fasten the sidewall 163 of the outer box 16 and the sidewall 182 of the inner box 18. For example, in a case where an acrylic screw is used as a screw made of a thermofusible material, the acrylic screw is dissolved at 150°C or less, so that the joint fastening between the outer box 16 and the inner box 18 is released, and the inner box 18 falls under its own weight. Furthermore, instead of a screw, a securing element made of a thermofusible material having a shaft shape such as a rivet may be used.

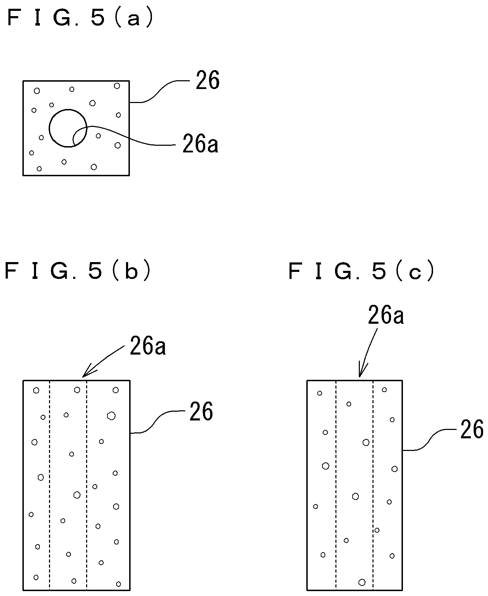

Furthermore, a thermally expandable filler 26 is disposed inside the inner box 18. As also illustrated in Fig. 5, a through-hole 26a for the water drain pipe 12 is formed through the thermally expandable filler 26. The diameter of the opening of the through-hole 26a has a sufficient clearance so as not to contact the outer wall of the water drain pipe 12. In addition, as illustrated in Figs. 1 and 6(a), the outer shape of the thermally expandable filler 26 is formed to be containable in a room formed by the outer box 16 and the inner box 18 in a condition that the inner box 18 is retained above the sliding range relative to the outer box 16. As the thermally expandable filler 26, a spongy or rubbery material with fire resistance is used, for example, starting thermal expansion at 200°C or more and expanding up to three to four times compared to a state at a normal temperature. It is desirable that the volume or shape of the thermally expandable filler 26 at room temperature is set such that the thermally expandable filler 26 can fill inside the outer box 16 and the inner box 18 due to the expansion.

As an operation test for the water drain structure for railway vehicles 10 according to the present embodiment, the water drain structure 10 was exposed under an atmosphere temperature of 843°C for 30 minutes. As a result, the retainer 20 was dissolved, and the inner box 18 fell to the lowermost position in the outer box 16. In addition, it was confirmed that the thermally expandable filler 26 fully expanded over the outer box 16 and the inner box 18 and further expanded inside the through-hole of the water drain pipe 12. Moreover, the retainer 20 was exposed to the outside of the outer box 16, and the thermally expandable filler 26 was housed inside of the outer box 16 and the inner box 18. Thus, it was confirmed that the retainer 20 increased in temperature and was dissolved at an early stage so as to cause the inner box 18 to fall. The thermally expandable filler 26 then expanded under the influence of the heat.

Note that, the thermally expandable filler 26 may be adopted as necessary. In addition, in the illustrated examples, there is adopted the box body having the double box structure of the outer box 16 and the inner box 18 as the shutter. However, the inner box 18 may be simply a plate-shaped shutter plate as appropriate. Moreover, in adoption of the thermally expandable filler 26, the thermally expandable filler 26 may be secured to the outer box 16 while securing space for a shutter plate moving up and down, or may be secured to a shutter plate to move up and down with the shutter plate. Furthermore, the water drain pipe 12 does not necessarily extend up to the interior of the outer box 16. In this case, the through-hole 26a for the water drain pipe 12 of the thermally expandable filler 26 will function as merely a water passage hole at a normal state.

Meanwhile, according to the embodiment of the present invention having the above-described configuration, the following operational effects can be obtained.

That is, at a normal state, the water drain structure for railway vehicles 10 according to the embodiment of the present invention is capable of outwardly discharging water accumulated in the vehicle via the water drain pipe 12 passing though the floor panel 104 (Fig. 7), the water drain pipe 12 including the upper end 12a having the opening inside the vehicle and the lower end 12b having the opening inside the underframe 106 (Fig. 7) or below the underframe 106. In addition, the lower end 12b of the water drain pipe 12 is provided with the closure 14, the closure 14 receiving heat from the outside to close the opening of the lower end 12b of the water drain pipe 12. The closure 14 is comprised of the box body 15 in which the opening 16a is formed on the sidewall 163, and at least the lower end 12b of the water drain pipe 12 is covered therewith. When the box body 15 is heated above the predetermined temperature, the shutter 18 operates under its own weight so as to close the opening 16a of the box body 15. Therefore, in the event of a fire, the closure 14 receives the heat to close the opening of the lower end 12b of the water drain pipe 12, so that it can more reliably prevent intrusion of smoke and flame from the outside into the vehicle via the water drain pipe 12.

Moreover, in the present embodiment, the closure 14 includes the box body having the double box structure with the outer box 16 and the inner box 18, the closure 14 upwardly covering a predetermined range from the lower end 12b of the water drain pipe 12. The outer box 16 includes the top plate 161, the bottom plate 162, and the sidewall 163, the water drain pipe 12 being secured to the top plate 161 in a condition that the water drain pipe 12 passes through the top plate 161. Thus, the water drain pipe 12 extends inside the outer box 16 from above to below, and the lower end 12b is positioned above the bottom plate 162. In addition, the inner box 18 includes the bottom plate 181 and the sidewall 182, the water drain pipe 12 being inserted into the opening 18a formed at the bottom plate 181. The inner box 18 is vertically movable by sliding inside the outer box 16 in the insertion direction of the water drain pipe 12. At the lowermost position (see Fig. 6(b)) in the sliding range of the inner box 18 relative to the outer box 16, the opening 16a at the sidewall 163 of the outer box 16 is closed by the sidewall 182 of the inner box 18. In this condition, the lower end 12b of the water drain pipe 12 is covered and hidden with the outer box 16 and the inner box 18, whereby it can more reliably prevent intrusion of smoke and flame from the outside into the vehicle via the water drain pipe 12.

Furthermore, the closure 14 includes the retainer 20 that holds the inner box 18 above the lowermost position in the sliding range of the inner box 18 relative to the outer box 16 (refer to Fig. 6(a)). The retainer 20 will then cause the inner box 18 to fall to the lowermost position when the closure 14 is heated above the predetermined temperature. Thus, at a normal state, the lower end 12b of the water drain pipe 12 is in fluid communication with the outside of the outer box 16 via the opening 16a at the sidewall 163 of the outer box 16. Therefore, the water accumulated in the vehicle can be discharged to the outside of the vehicle via the water drain pipe 12. On the other hand, in the event of a fire, when heated to the temperature above the predetermined temperature, the retainer 20 causes the inner box 18 to fall to the lowermost position. Therefore, as described above, the lower end 12b of the water drain pipe 12 is covered with the outer box 16 and the inner box 18, whereby it can more reliably prevent intrusion of smoke and flame from the outside into the vehicle via the water drain pipe 12.

In addition, the retainer 20 is the joint including the pair of members 20a and 20b secured with the thermofusible material, the one member 20a of the pair of members being secured to the outer box, and the other member 20b of the pair of members being secured to the inner box 18. Thus, at a normal state, the outer box 16 and the inner box 18 are retained via the joint such that the outer box 16 and the inner box 18 are positioned above the lowermost position in the sliding range of the inner box 18 relative to the outer box 16 (see Figs. 1 and 6(a)). On the other hand, in the event of a fire, the joint is heated above the predetermined temperature, and the thermofusible material is dissolved so as to make the pair of members 20a and 20b separated from each other. Accordingly, the inner box 18 is allowed to fall to the lowermost position.

In addition, similar effects can be obtained even in a case where a screw or the like made of a thermofusible material is used as the retainer 20.

In addition, the through-hole 26a for the water drain pipe 12 is formed through the thermally expandable filler 26 disposed inside the inner box 18, so that the water drain pipe 12 extending inside the outer box 16 from above to below is positioned in the through-hole 26a of the thermally expandable filler 26. Even in the event of a fire, when the retainer 20 is heated above the predetermined temperature, the fall of the inner box 18 to the lowermost position in the sliding range will not be hindered because of the through-hole 26a formed through the thermally expandable filler 26. The inner box falls to the lowermost position, the lower end 12b of the water drain pipe 12 is covered with the outer box 16 and the inner box 18, and the thermally expandable filler 26 also receives heat to expand. As a result, as illustrated in Fig. 6(b), the inner space of the outer box 16 and the inner box 18 is closed with the thermally expandable filler 26. Furthermore, with the inner box 18 falling to the lowermost position, the through-hole 26a for the water drain pipe 12 of the thermally expandable filler 26 is also closed due to its own expansion. Accordingly, the opening of the lower end 12b of the water drain pipe 12 is also closed with the thermally expandable filler 26 that has been expanded, whereby it can more reliably prevent intrusion of smoke and flame from the outside into the vehicle via the water drain pipe 12.

In addition, the sidewall 163 of the outer box 16 has the hat shape in cross section in the direction intersecting the insertion direction of the water drain pipe 12, and the flange 16b forming the hat shape serves as the joining portion to the constituent member 106a (see Fig. 1(a)) of the underframe 106. Thus, the outer box 16 is secured to the underframe 106 via the flange 16b. In this case, the wall face of the underframe constituent member 106a is also to be used as an element forming space in which the inner box 18 is slidably housed inside the outer box 16. Note that, for this configuration, as necessary, the sidewall 163 of the outer box 16 may be rectangular in cross section in the direction intersecting the insertion direction of the water drain pipe 12, and an installing flange to the wall face of the underframe constituent member 106a may be separately provided.

In addition, the sidewall 182 of the inner box 18 has the channel shape in cross section in the direction intersecting the insertion direction of the water drain pipe 12, and the bottom 18b forming the channel shape faces the opening 16a at the outer box 16. Thus, the sidewall 182 of the inner box 18 is positioned in and slidably guided by the sidewall 163 of the outer box 16. In the event of a fire, when the retainer 20 is heated above the predetermined temperature, the inner box 18 falls to the lowermost position in the sliding range, so that the opening 16a formed at the outer box 16 can be closed by the bottom 18b forming the channel shape of the inner box 18. Also in this configuration, the sidewall 182 of the inner box 18 may be rectangular in cross section in the direction intersecting the insertion direction of the water drain pipe 12 as appropriate.

Note that, in the illustrated examples, the outer box 16 and the inner box 18 each are substantially rectangular in plan view. However the shape of the outer box 16 and the inner box 18 is not limited to this shape, and may be circular, semicircular, elliptical, or polygonal other than square in plan view, or may be a different shape suitable for securing to the underframe 106.

### [EXPLANATION FOR REFERENCES]

- 10: WATER DRAIN STRUCTURE FOR RAILWAY VEHICLES
- 12: WATER DRAIN PIPE
- 12a: UPPER END
- 12b: LOWER END
- 14: CLOSURE
- 16: OUTER BOX
- 161: TOP PLATE
- 162: BOTTOM PLATE
- 163: SIDEWALL
- 16a: OPENING
- 16b: FLANGE
- 18: INNER BOX
- 181: BOTTOM PLATE
- 182: SIDEWALL
- 18a: BOTTOM
- 20: RETAINER
- 21: THERMOFUSIBLE MATERIAL (SOLDER)
- 20a: ONE MEMBER
- 20b: THE OTHER MEMBER
- 26: THERMALLY EXPANDABLE FILLER
- 26a: THROUGH-HOLE

## Claims

1. A water drain structure for railway vehicles including a water drain pipe passing through a floor panel, the water drain pipe having an upper end with an opening inside the vehicle and a lower end with an opening inside an underframe or below the underframe, the water drain structure for railway vehicles comprising:
a closure configured to receive heat from an outside so as to close the opening of the lower end of the water drain pipe.

2. The water drain structure for railway vehicles according to claim 1, wherein the closure is a box body covering at least the lower end of the water drain pipe, the box body has an opening at a sidewall of the box body, and the closure includes a shutter configured to operate under own weight to close the opening when the box body is heated above a predetermined temperature.

3. The water drain structure for railway vehicles according to claim 1 or 2, wherein the closure is a box body having a double box structure covering at least the lower end of the water drain pipe, the box body including an outer box and an inner box,
the outer box includes: a top plate; a bottom plate; and a sidewall, the water drain pipe being secured to the top plate in a condition that the water drain pipe passes through the top plate, and the sidewall having an opening in a predetermined range upward from an lower end of the sidewall,
the inner box includes at least a bottom plate and a sidewall, the bottom plate having an opening through which the water drain pipe is inserted, and the inner box being slidable inside the outer box in an insertion direction of the water drain pipe,
at a lowermost position in a sliding range of the inner box relative to the outer box, the opening formed at the sidewall of the outer box is closed by the sidewall of the inner box, and
the closure includes a retainer retaining the inner box above the lowermost position, the retainer being configured to cause the inner box to fall to the lowermost position when the retainer is heated above a predetermined temperature.

4. The water drain structure for railway vehicles according to claim 3, wherein the retainer is a joint including a pair of members secured via a thermofusible material, one member of the pair of members being secured to the outer box, and another member of the pair of members being secured to the inner box.

5. The water drain structure for railway vehicles according to claim 3 or 4, wherein a thermally expandable filler is disposed inside the inner box, the thermally expandable filler having a through-hole for the water drain pipe.

6. The water drain structure for railway vehicles according to any one of claims 3 to 5, wherein the sidewall of the outer box has a hat shape in a cross section in a direction intersecting the insertion direction of the water drain pipe, and a flange forming the hat shape serves as a joining portion to a constituent member of the underframe.

7. The water drain structure for railway vehicles according to claim 6, wherein the sidewall of the inner box has a channel shape in a cross section in the direction intersecting the insertion direction of the water drain pipe, and a bottom forming the channel shape faces the opening formed at the outer box.
